# EUROPÄISCHE PATENTSCHRIFT

(11) **EP 2 218 836 B1**
(45) Veröffentlichungstag und Bekanntmachung des Hinweises auf die Patenterteilung: **05.04.2017**
(21) Anmeldenummer: 09002135.3
(22) Anmeldetag: 16.02.2009
(51) Int. Cl.: E02F 9/08, E02F 9/18, B66C 23/74, B66C 23/80, B66F 9/075, B60S 9/12

(54) **Fahrzeug, insbesondere Baufahrzeug**
Vehicle, in particular construction vehicle
Véhicule, notamment véhicule de chantier

(43) Veröffentlichungstag der Anmeldung: 18.08.2010
(73) Patentinhaber: BAUER Maschinen GmbH, 86529 Schrobenhausen (DE)
(72) Erfinder: Arzberger, Maximilian, 86568 Igenhausen (DE); Huber, Ludwig Andreas, 85250 Thalhausen (DE)
(74) Vertreter: Wunderlich, Rainer

(56) Entgegenhaltungen:
- DE-A1- 19 801 837
- DE-A1- 19 803 780
- DE-U1- 29 704 212
- DE-U1-202006 019 421
- US-A- 5 598 935

## Beschreibung

Die Erfindung betrifft ein Fahrzeug, insbesondere Baufahrzeug, mit einem lösbaren Ballastgewicht, einer Hebeeinrichtung zum Heben des Ballastgewichtes von einer Ablageposition in eine Montageposition an dem Fahrzeug und einer Stützeinrichtung mit mindestens einem ausfahrbaren Stützfuß, gemäß dem Oberbegriff des Patentanspruchs 1.

Baufahrzeuge, beispielsweise Kranwagen, fahrbare Bohrgeräte und Rüttler, sind häufig mit Ballastgewichten versehen. Die Ballastgewichte dienen der Reduzierung einer Kippgefahr des Fahrzeuges und sind in der Regel gegenüberliegend einem Mast oder Arbeitsgerät an dem Baufahrzeug angeordnet.

Um das Gesamtgewicht des Fahrzeuges bei einem Transport von und zu der Baustelle zu reduzieren und so unter vorgegebenen Grenzwerten zu halten, ist es üblich, das Ballastgewicht von dem Fahrzeug zu lösen und getrennt zum Einsatzort zu transportieren. An der Baustelle ist das Ballastgewicht dann wieder an das Fahrzeug zu montieren.

Zur Erhöhung der Kippstabilität ist es weiter bekannt, am Fahrzeug eine zusätzliche Stützeinrichtung zu verwenden. Diese besteht in der Regel aus mehreren Stützfüßen, welche ausfahrbar sind und den Auflagebereich des Fahrzeuges auf den Boden erhöhen.

Ein gattungsgemäßes Fahrzeug geht aus der US 5,598,935 hervor. Ein Ballastgewicht wird zunächst angehoben und anschießend ein Halteträger ausgefahren. Das Ballastgewicht wird dann auf den ausgefahrenen Träger abgesenkt, wobei dies zur Einführung von Zapfen unter Justierung zu erfolgen hat. Abschließend wird das Ballastgewicht durch Verschrauben am Träger befestigt.

Aus der DE 198 01 837 A1 ist eine Vorrichtung zum Anheben eines Ballastgewichtes unter Zuhilfenahme passiver, verriegelbarer Stützen bekannt. Das Ballastgewicht wird auf einem Unterwagen abgelegt, welcher mittels der hydraulisch betätigten Stützfüße angehoben wird. Die passiven Stützen halten das Ballastgewicht in der angehobenen Position.

Ein weiteres Fahrzeug geht beispielsweise aus der US 3,278,045 hervor. Zum Anheben und Befestigen des Ballastgewichtes am Fahrzeug wird die Seilwindeneinrichtung eines Kranes verwendet. Beim Anheben des Ballastgewichtes wird das Fahrzeug zusätzlich über ausgefahrene Stützfüße abgestützt.

Aus der EP 1 780 167 A2 ist weiterhin ein Fahrzeugkran bekannt, bei welchem zum Anheben des Ballastgewichtes eine separate Seilwindeneinrichtung vorgesehen ist.

Weiterhin geht aus der US 3,902,735 ein Bagger mit einer Hebeeinrichtung für ein Ballastgewicht hervor. Die Hebeeinrichtung umfasst einen an der Unterseite eines Oberwagens angebrachten Schwenkarm, welcher über ein Paar von Stellzylindern zum Heben und Senken des Ballastgewichtes verschwenkt wird.

Der Erfindung liegt die **Aufgabe** zugrunde, eine Fahrzeug, insbesondere ein Baufahrzeug, anzugeben, welches bei einem konstruktiv einfachen Aufbau eine zuverlässige und sichere Handhabung und Befestigung des Ballastgewichtes ermöglicht.

Nach der Erfindung wird die Aufgabe durch ein Fahrzeug mit den Merkmalen des Patentanspruchs 1 gelöst. Bevorzugte Ausführungsformen sind in den abhängigen Ansprüchen angegeben.

Bei dem erfindungsgemäßen Fahrzeug ist vorgesehen, dass die Stützeinrichtung zum Ausfahren des mindestens einen Stützfußes mindestens einen Stellzylinder aufweist und dass der mindestens eine Stellzylinder gleichzeitig zum Heben und Senken des Ballastgewichtes ausgebildet ist.

Ein Grundgedanke der Erfindung besteht darin, zum Heben des Ballastgewichtes keine zusätzliche Hebeeinrichtung vorzusehen. Vielmehr wird hierfür der in der Regel hydraulische Stellzylinder eingesetzt, welcher zum Ausfahren eines Stützfußes angeordnet ist. Hierdurch wird der konstruktive Aufwand der Gesamtvorrichtung vereinfacht, zumal das Heben und Senken des Ballastgewichtes und das Ausfahren der Stützfüße nicht gleichzeitig erfolgen müssen.

Nach der Erfindung ist es vorgesehen, dass der mindestens eine Stellzylinder eine Kolbenstange aufweist, welche sowohl mit einem Stützteller als auch mit dem Ballastgewicht verbindbar ist. So kann der Stützteller, welcher eine Auflage des Stützfußes am Boden bildet, im Bedarf durch eine lösbare Verbindungseinrichtung von der Kolbenstange entfernt werden. Auf diese Weise kann der Stützteller mit einem großen Durchmesser ausgebildet und einfach entfernt werden, wenn der Stellzylinder mit dem Ballastgewicht lösbar verbunden wird. Die Verbindungseinrichtung für den Stützteller kann getrennt von einer Verbindungseinrichtung für das Ballastgewicht ausgebildet sein. Insbesondere ist zur Befestigung des Stütztellers eine einfache Gewindeverbindung oder eine einfache Verbolzung ausreichend.

Grundsätzlich können die Stellzylinder seitlich neben dem Ballastgewicht angeordnet sein. Für eine möglichst biegemomentfreie Betätigung des Ballastgewichtes ist es erfindungsgemäß vorteilhaft, dass das Ballastgewicht für jeden Stellzylinder einen Durchgang aufweist, durch welchen der jeweilige Stellzylinder hindurchreicht. Die Durchgänge können insbesondere im Zentrum des Ballastgewichtes angeordnet sein, so dass praktisch kein Biegemoment auf den oder die Stellzylinder ausgeübt wird. Dies erlaubt eine weitere Vereinfachung der Konstruktion und direkte Verbindung ohne Hebelmechanismus.

Weiter ist es erfindungsgemäß, dass zum lösbaren Verbinden des Ballastgewichtes mit der Kolbenstange des mindestens einen Stellzylinders eine Verriegelungseinrichtung vorgesehen ist. Die Verriegelungseinrichtung kann automatisch, etwa durch einen eigenen Verriegelungszylinder, oder von Hand erfolgen.

Dabei ist es nach der Erfindung besonders bevorzugt, dass die Verriegelungseinrichtung mindestens einen Riegelbolzen zum Bilden einer formschlüssigen Verbindung umfasst. Der Riegelbolzen kann dabei quer zur Verfahrrichtung der Kolbenstange, also etwa horizontal betätigt werden. Hierzu können am Ballastgewicht horizontale Durchgänge für den Riegel ausgebildet sein. Durch einen Riegelbolzen wird eine zumindest formschlüssige Befestigung des Ballastgewichtes an dem Stellzylinder erreicht. Durch entsprechende konische Flächen an dem Riegelbolzen oder an den zugehörigen Gegenflächen sowohl der Kolbenstange als auch des Ballastgewichtes kann beim Heben des Ballastgewichtes eine zusätzliche Klemmwirkung und damit eine weitere kraftschlüssige Komponente erreicht werden.

Eine Erhöhung der Variabilität des erfindungsgemäßen Fahrzeuges wird dadurch erreicht, dass das Ballastgewicht eine Grundplatte umfasst, auf welcher weitere Ballastplatten anbringbar sind, und dass die Verriegelungseinrichtung im Bereich der Grundplatte ausgebildet ist. Das Ballastgewicht ist dabei platten- oder segmentweise aufgebaut, wobei die unterste Auflageplatte die Grundplatte ist. Abhängig vom notwendigen Gesamtgewicht für die Ballastierung können dann ein oder mehrere weitere Ballastplatten auf die Grundplatte aufgelegt und mit dieser verbunden werden. Die Ballastplatten können dabei als einfache Metal- oder Betonplatten ausgebildet sein, da allein die Grundplatte die Verriegelungseinrichtung mit dem Riegel und eventuellen Riegeldurchgängen umfasst.

Weiter ist es erfindungsgemäß, dass am Fahrzeug eine Befestigungseinrichtung vorgesehen ist, mit welcher das Ballastgewicht in der Montageposition lösbar an dem Fahrzeug befestigbar ist. Nach dem Anheben des Ballastgewichtes mittels der Hebeeinrichtung in die Montageposition wird das Ballastgewicht über die Befestigungseinrichtung fest mit dem Rahmen des Fahrzeuges verbunden. Anschließend kann dann die Verriegelungseinrichtung zwischen dem Ballastgewicht und dem Stellzylinder gelöst werden, so dass die Stellzylinder nunmehr wieder frei verfügbar sind, um als Stützeinrichtung verwendet zu werden. Zum Demontieren des Ballastgewichtes wird entsprechend umgekehrt verfahren.

Grundsätzlich kann die erfindungsgemäße Stütz- und Hebeeinrichtung sowohl an Radfahrzeugen als auch an Kettenfahrzeugen zum Einsatz kommen. Dabei kann das Fahrwerk starr mit dem Aufbau verbunden sein. Besonders bevorzugt ist es nach der Erfindung, dass das Fahrzeug einen Unterwagen und einen daran drehbar gelagerten Oberwagen aufweist, wobei der Stellzylinder und das Ballastgewicht in der Montageposition an einem Heckbereich des Oberwagens angeordnet sind. In einem Frontbereich, welcher dem Heckbereich gegenüber liegt, ist dabei in der Regel das schwere Arbeitsgerät, etwa ein Mast mit Bohrantrieb, angeordnet. Um ein Kippen in Richtung des Frontbereiches zu vermeiden, wird die Ballastierung am Heckbereich vorgesehen. Die erfindungsgemäße Anordnung am drehbaren Oberwagen stellt so die Kippstabilität sicher, auch wenn die Längsrichtung des Oberwagens gegenüber der Längsrichtung des Unterwagens verdreht wird.

Dabei ist es bevorzugt, dass das Ballastgewicht am Oberwagen in zumindest einer Position über den Unterwagen hinausreicht und durch den mindestens einen Stellzylinder vertikal in die Ablageposition am Boden absetzbar ist. Die Position ist dabei vorzugsweise die Stellung des Oberwagens, bei welcher dieser mit seiner Längsrichtung gleichgerichtet zur Längsrichtung des Unterwagens ist. Es ist jedoch auch möglich, dass bei einer Verdrehung des Oberwagens um 90° das Ballastgewicht an- oder abgebaut wird, da in der Regel die Länge des Oberwagens die Breite des Unterwagens übersteigt.

Es ist erfindungsgemäß, dass im Betrieb der Stützteller an der Kolbenstange unterhalb des Ballastgewichtes in der Montageposition angeordnet ist. Dabei ist der Stützzylinder mit seinem Zylindergehäuse fest am Aufbau des Fahrzeuges, insbesondere dem Oberwagen, verbunden und die Kolbenstange ragt von oben durch das gesamte Ballastgewicht hindurch und an der Unterseite des Ballastgewichtes hervor. In dieser Position kann der Stützteller, welcher insbesondere einen größeren Durchmesser als der Durchgang durch das Ballastgewicht aufweisen kann, mit der Kolbenstange verbunden werden. Sodann ist es möglich, den Stützteller nach unten zu fahren, um so das Fahrzeug gegenüber dem Boden zusätzlich abzustützen.

Eine besonders stabile Hebeeinrichtung wird erfindungsgemäß dadurch erreicht, dass zwei Stellzylinder vorgesehen sind, welche zum Heben und Senken des Ballastgewichtes gleichzeitig betätigbar sind. Die beiden Stellzylinder sind dabei symmetrisch zur Längsachse des Fahrzeuges und im Zentrumsbereich des Ballastgewichtes angeordnet. Durch die Verwendung von zwei Stellzylindern wird bei einem weiter kompakten Aufbau auch das Anheben großer Gewichte zur Ballastierung erreicht.

Die Erfindung wird nachfolgend anhand von bevorzugten Ausführungsbeispielen weiterbeschrieben, welche schematisch in den beiliegenden Zeichnungen dargestellt sind. In den Zeichnungen zeigen:
- Fig. 1: eine schematische Teilquerschnittsansicht eines erfindungsgemäßen Fahrzeuges;
- Fig. 2: eine perspektivische Darstellung des Ballastgewichtes von Fig. 1;
- Fig. 3: eine Teilquerschnittsansicht des Ballastgewichtes von Fig. 2;
- Fig. 4: eine Seitenansicht eines weiteren erfindungsgemäßen Fahrzeuges mit dem Ballastgewicht in der Ablageposition;
- Fig. 5: eine vergrößerte Teilansicht des Ballastgewichtes in der Ablageposition;
- Fig. 6: eine vergrößerte schematisierte Darstellung einer Verriegelungseinrichtung; und
- Fig. 7: eine Ansicht des Fahrzeuges von Fig. 4 mit dem Ballastgewicht in der Montageposition.

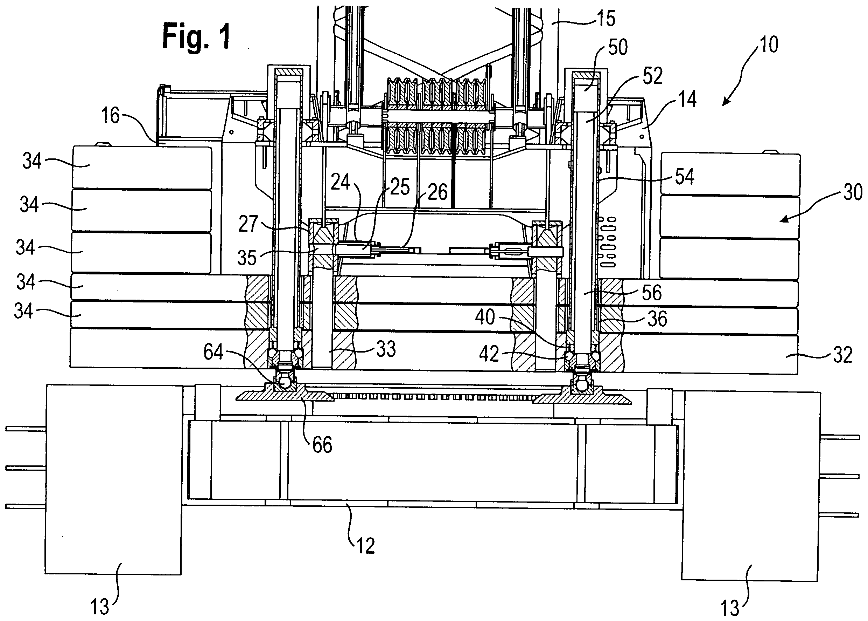

Bei dem ersten Ausführungsbeispiel gemäß Fig. 1 eines erfindungsgemäßen Fahrzeuges 10 umfasst dieses einen Unterwagen 12 mit seitlichen Raupenketten 13. Ein Oberwagen 14 ist drehbar auf dem Fahrwerk des Unterwagens 12 gelagert. An dem dargestellten Heckbereich 16 des Oberwagens 14 ist ein erfindungsgemäßes Ballastgewicht 30 angeordnet. Dem Heckbereich 16 gegenüberliegend ist an dem Oberwagen 14 ein Mastaufbau 15 angeordnet, welcher nur teilweise dargestellt ist.

Um im Betrieb des Fahrzeuges 10 die Gefahr eines Kippens in Richtung des Mastaufbaus 15 zu vermeiden, ist an dem Heckbereich 16 des Oberwagens 14 das erfindungsgemäße Ballastgewicht 30 positioniert. Das Ballastgewicht 30 umfasst eine unten liegende Grundplatte 32, auf welcher mehrere Ballastplatten 34 entsprechend der notwendigen Ballastierung aufgestapelt sind.

In einem Mittenbereich der Grundplatte 32 sind zwei zylindrische Halteschäfte 33 angebracht, welche durch Durchgänge in den beiden unteren Halteplatten 34 nach oben in eine Ausnehmung an dem Ballastgewicht 30 ragen. Zur Befestigung des Ballastgewichtes 30 am Heckbereich 16 sind am Oberwagen 14 zwei Befestigungseinrichtungen 24 angeordnet, welche jeweils einen horizontal gerichteten Betätigungszylinder 26 mit einem Sperrbolzen 25 aufweisen. Die Betätigungszylinder 26 sind jeweils an Aufnahmehülsen 27, welche fest mit dem Oberwagen 14 verbunden sind, angebracht.

In der dargestellten Montageposition des Ballastgewichtes 30 am Oberwagen 14 ragen die Halteschäfte 33 in die beiden Aufnahmehülsen 27 hinein. Durch Verfahren der Sperrbolzen 25 durch einen entsprechenden Bolzendurchgang 35 in den Halteschäften 33 und den Aufnahmehülsen 27 erfolgt eine formschlüssige Verriegelung des Ballastgewichtes 30 an dem Oberwagen 14. Die verriegelte Position ist in Fig. 1 an der rechten Befestigungseinrichtung 24 zu entnehmen, während die linke Befestigungseinrichtung 24 den Sperrbolzen 25 in der zurückgezogenen Position zum Demontieren des Ballastgewichtes 30 zeigt.

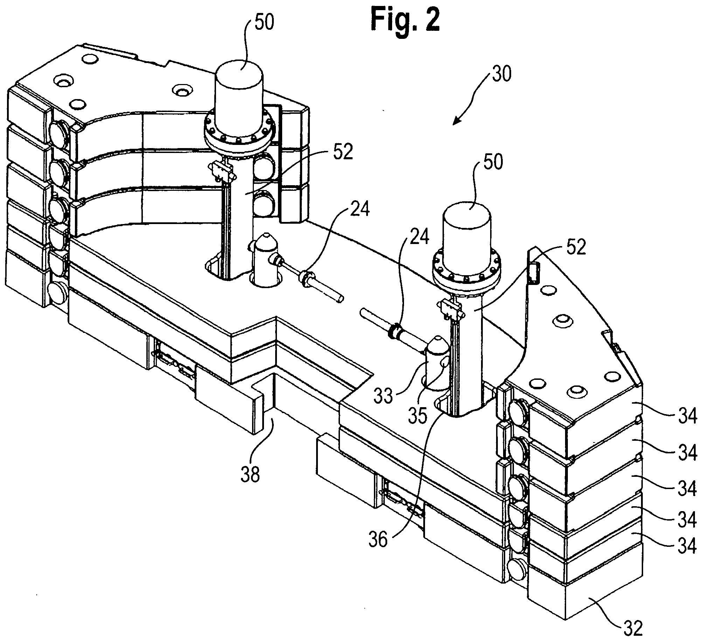

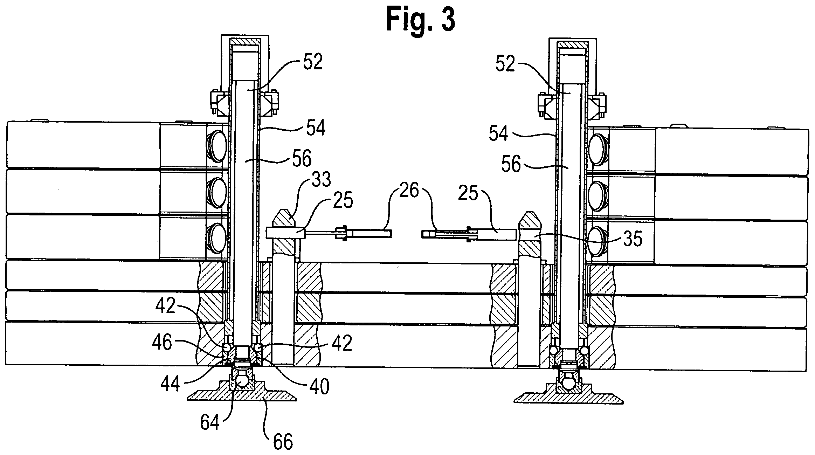

Wie auch im Zusammenhang mit den Figuren 2 und 3 näher zu ersehen ist, weist das erfindungsgemäße Fahrzeug 10 eine Hebeeinrichtung 50 mit zwei Stellzylindern 52 auf, welche in einem Mittenbereich des Ballastgewichtes 30 die Grundplatte 32 und die beiden unteren Ballastplatten 34 durch entsprechende Durchgänge 36 von oben nach unten durchragen. Die beiden Stellzylinder 52 sind am Heckbereich 16 des Oberwagens 14 befestigt. Diese umfassen jeweils ein Zylindergehäuse 54, in welchem durch entsprechende Zu- und Ableitung eines Hydraulikfluides eine Kolbenstange 56 verfahrbar ist. Das untere Ende der Kolbenstange 56 dient als Stützfuß 64 und ist hierfür mit einem zylindrischen Stützteller 66 versehen. Der Stützteller 66 ist über eine lösbare Verbindungseinrichtung mit der Kolbenstange 56 verbunden.

Etwas oberhalb des Stütztellers 66 ist im Bereich der Grundplatte 32 eine Verriegelungseinrichtung 40 vorgesehen, mit welcher die Kolbenstange 56 mit der Grundplatte 32 des Ballastgewichtes 30 verbunden werden kann. Hierzu weist jede Kolbenstange 56 ein ringförmiges Konuselement 44 mit schräggstellten Außenflächen auf. Am zugehörigen Durchgang 36 der Grundplatte 32 sind entsprechende Fixierhülsen 46 so angeordnet, dass durch horizontales Einschieben von zwei Riegelbolzen 42 eine formschlüssige Verbindung zwischen der Kolbenstange 56 und der Grundplatte 32 hergestellt wird. Mit dieser Verriegelung kann das Ballastgewicht 30 über die Hebeeinrichtung 50 mit den beiden Stellzylindern 52 vertikal zwischen der dargestellten Montageposition am Oberwagen 14 und einer Ablageposition am Boden verfahren werden. Eine zusätzliche Zentrierung am Oberwagen 14 erfolgt über eine Justiernut 38, welche an der dem Oberwagen 14 zugewandten Seite des Ballastgewichtes 30 angeordnet ist.

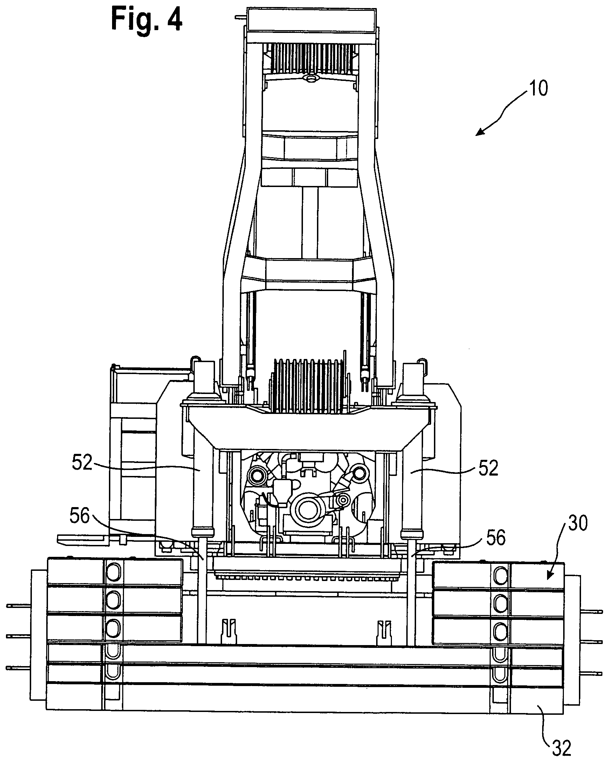

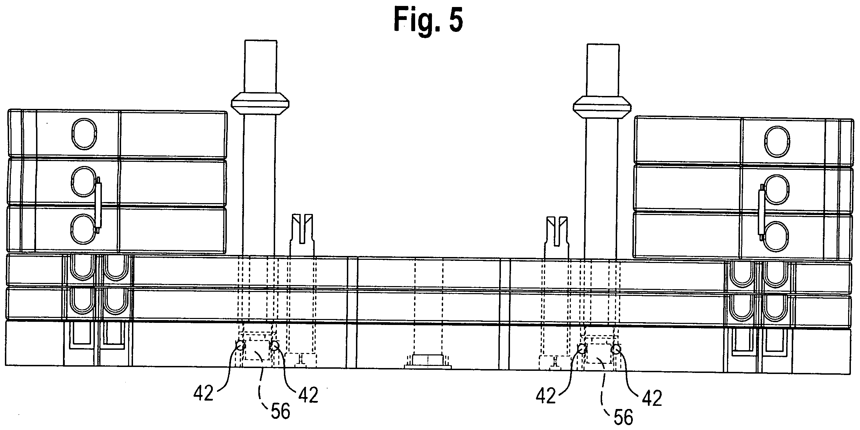

Fig. 4 zeigt anhand eines weiteren Ausführungsbeispiels die Ablageposition, bei welcher das Ballastgewicht 30 mit der Grundplatte 32 auf dem Boden aufliegt. In dieser Position kann das Ballastgewicht 30 von dem Fahrzeug 10 aufgenommen werden, in dem dieses an das Ballastgewicht 30 heranfährt und zur weiteren Montage justiert wird. Nach dieser Justierung können die Kolbenstangen 56 der Stellzylinder 52 vertikal nach unten bis zu der Position gemäß Fig. 5 ausgefahren werden.

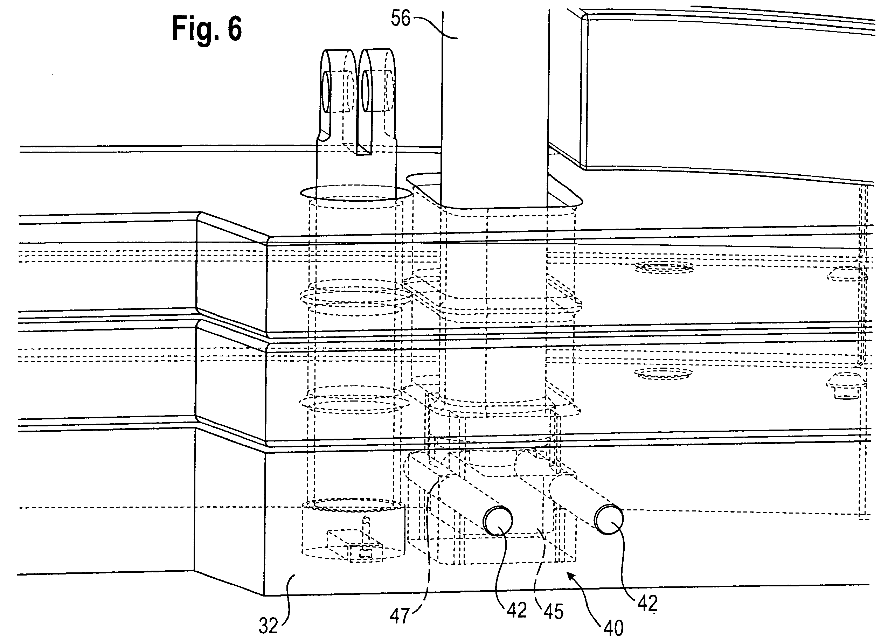

In dieser ausgefahrenen Position der Kolbenstangen 56 können nun die Riegelbolzen 42 etwa horizontal durch entsprechende Bohrungen in der Grundplatte 32 eingeschoben werden, wie dies insbesondere Fig. 6 zu entnehmen ist. Die Riegelbolzen 42 liegen einerseits an einem blockförmigen Konuselement 45 mit konischen Seitenflächen an der Kolbenstange 56 und andererseits an einem konischen Widerlager 47 mit konischen Seitenflächen an der Grundplatte 32 an. Hierdurch wird eine formschlüssige Verriegelung der Kolbenstange 56 mit der Grundplatte 32 und damit mit dem Ballastgewicht 30 erreicht.

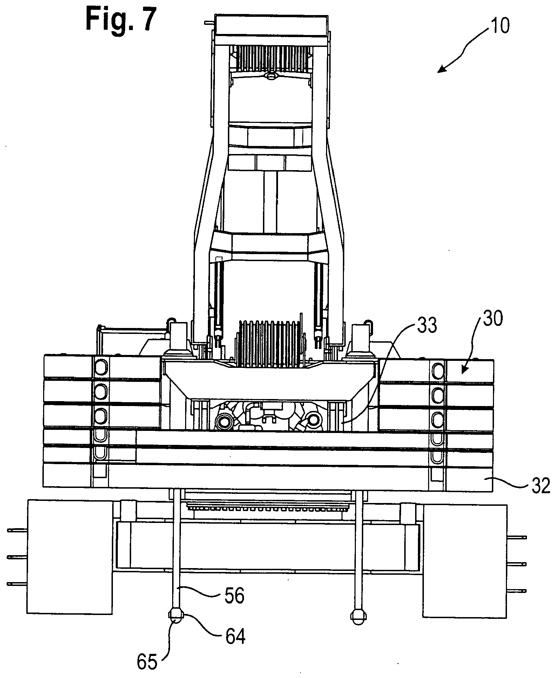

Nunmehr kann das Ballastgewicht 30 durch Einfahren der Kolbenstangen 56 vertikal nach oben in die Montageposition am Oberwagen 14 des Fahrzeuges 10 verfahren werden. In dieser nach oben gefahrenen Position kann nunmehr über eine Befestigungseinrichtung, welche gemäß Fig. 7 eine einfache Verbolzung ist, das Ballastgewicht 30 über die Halteschäfte 33 fest mit dem Oberwagen 14 verbunden werden.

Anschließend kann die Verriegelungseinrichtung 40 zwischen den Kolbenstangen 56 und der Grundplatte 32 wieder gelöst werden. Somit können die Kolbenstangen 56 wieder frei nach unten verfahren werden und als Stützfüße 64 die Auflagefläche und damit die Kippstabilität des Fahrzeuges 10 verbessern. Bei der in Fig. 7 dargestellten Ausführungsform sind einfache Kugelkalotten 65 an der Unterseite der Kolbenstange 56 zum Bilden des Stützfußes 64 vorgesehen. Zum Lösen und Demontieren des Ballastgewichtes 30 kann dann entsprechend umgekehrt verfahren werden.

## Patentansprüche

1. Fahrzeug, insbesondere Baufahrzeug, mit
- einem lösbaren Ballastgewicht (30) mit einer Grundplatte (32),
- einer Hebeeinrichtung (50) zum Heben des Ballastgewichtes (30) von einer Ablageposition in eine Montageposition an dem Fahrzeug (10) und
- einer Stützeinrichtung mit mindestens einem ausfahrbaren Stützfuß (64),
- wobei die Stützeinrichtung zum Ausfahren des mindestens einen Stützfußes (64) mindestens einen Stellzylinder (52) aufweist,
- der mindestens eine Stellzylinder (52) sowohl zum Heben als auch zum Senken des Ballastgewichtes (30) ausgebildet ist und
- der mindestens eine Stellzylinder (52) eine Kolbenstange (56) aufweist, welche sowohl mit einem Stützteller (66) als auch mit dem Ballastgewicht (30) verbindbar ist,
**dadurch gekennzeichnet,**
- **dass** an der Grundplatte (32) zwei Halteschäfte (33) nach oben ragen,
- **dass** an einem Oberwagen (14) Aufnahmehülsen (27) angeordnet sind, in welche beim Heben in die Montageposition die Halteschäfte (33) hinein ragen,
- **dass** in den Halteschäften (33) und den Aufnahmehülsen (27) Bolzendurchgänge (35) vorgesehen sind, und
- **dass** zumindest eine Befestigungseinrichtung (24) mit einem horizontal gerichteten Stellzylinder (26) mit einem Sperrbolzen (25) vorgesehen ist, welcher zur lösbaren Befestigung des Ballastgewichtes (30) an dem Oberwagen (14) in einen Bolzendurchgang (35) verfahrbar ist.

2. Fahrzeug nach Anspruch 1,
**dadurch gekennzeichnet,**
**dass** das Ballastgewicht (30) für jeden Stellzylinder (52) einen Durchgang (36) aufweist, durch welchen der jeweilige Stellzylinder (52) hindurchreicht.

3. Fahrzeug nach Anspruch 1 oder 2,
**dadurch gekennzeichnet,**
**dass** zum lösbaren Verbinden des Ballastgewichtes (30) mit der Kolbenstange (56) des mindestens einen Stellzylinders (52) eine Verriegelungseinrichtung (40) vorgesehen ist.

4. Fahrzeug nach Anspruch 3,
**dadurch gekennzeichnet,**
**dass** die Verriegelungseinrichtung (40) mindestens einen Riegelbolzen (42) zum Bilden einer formschlüssigen Verbindung umfasst.

5. Fahrzeug nach Anspruch 3 oder 4,
**dadurch gekennzeichnet,**
**dass** auf der Grundplatte (32) weitere Ballastplatten (34) anbringbar sind, und dass die Verriegelungseinrichtung (40) im Bereich der Grundplatte (32) ausgebildet ist.

6. Fahrzeug nach einem der Ansprüche 1 bis 5,
**dadurch gekennzeichnet,**
**dass** das Fahrzeug (10) einen Unterwagen (12) und den daran drehbar gelagerten Oberwagen (14) aufweist, wobei der Stellzylinder (52) und das Ballastgewicht (30) in der Montageposition an einem Heckbereich des Oberwagens (14) angeordnet sind.

7. Fahrzeug nach Anspruch 6,
**dadurch gekennzeichnet,**
**dass** das Ballastgewicht (30) an dem Oberwagen (14) in zumindest einer Position über den Unterwagen (12) hinausreicht und durch den mindestens einen Stellzylinder (52) vertikal in der Ablageposition am Boden absetzbar ist.

8. Fahrzeug nach einem der Ansprüche 1 bis 7,
**dadurch gekennzeichnet,**
**dass** im Betrieb ein Stützteller (66) an der Kolbenstange (56) unterhalb des Ballastgewichtes (30) in der Montageposition angeordnet ist.

9. Fahrzeug nach einem der Ansprüche 1 bis 8,
**dadurch gekennzeichnet,**
**dass** zwei Stellzylinder (52) vorgesehen sind, welche zum Heben und Senken des Ballastgewichtes (30) gleichzeitig betätigbar sind.

## Claims

1. Vehicle, in particular construction vehicle, comprising
- a detachable ballast weight (30) with a base plate (32),
- a lifting means (50) for lifting the ballast weight (30) from a set-down position into a mounting position on the vehicle (10) and,
- a support means having at least one extendable support foot (64),
- wherein for extension of the at least one support foot (64) the support means has at least one positioning cylinder (52),
- the at least one positioning cylinder (52) is designed both for lifting and lowering the ballast weight (30) and,
- the at least one positioning cylinder (52) has a piston rod (56), which can be
connected both to a support disk (66) and to the ballast weight (30),
**characterized in that**
- on the base plate (32) two retaining shafts (33) rise upwards,
- **in that** on a upper carriage (14) are arranged accommodating sleeves (27) into which the retaining shafts (33) project during lifting into the mounting position,
- **in that** in the retaining shafts (33) und the accommodating sleeves (27) bolt passages (35) are provided and,
- **in that** at least one fastening means (24) with a horizontally directed actuating cylinder (26) with a locking bolt (25) is provided, which can be moved on the upper carriage (14) in a bolt passage (35) for detachably fastening the ballast weight (30).

2. Vehicle according to claim 1,
**characterized in that**
for each positioning cylinder (52) the ballast weight (30) has a passage (36), through which the respective positioning cylinder (52) reaches.

3. Vehicle according to claim 1 or 2,
**characterized in that**
for detachably connecting the ballast weight (30) to the piston rod (56) of the at least one positioning cylinder (52) a locking means (40) is provided.

4. Vehicle according to claim 3,
**characterized in that**
the locking means (40) comprises at least one latch bolt (42) for establishing a formfitting connection.

5. Vehicle according to claim 3 or 4,
**characterized in that**
on the base plate (32) can be fixed further ballast plates (34), and
**in that** the locking means (40) is designed in the region of the base plate (32).

6. Vehicle according to any one of claims 1 to 5,
**characterized in that**
the vehicle (10) has an undercarriage (12) and the upper carriage (14) rotatably supported thereon, whereby in the mounting position the positioning cylinder (52) and the ballast weight (30) are arranged on a rear region of the upper carriage (14).

7. Vehicle according to claim 6,
**characterized in that**
the ballast weight (30) on the upper carriage (14) reaches in at least one position beyond the undercarriage (12) and can be placed vertically into the set-down position on the ground by means of the at least one positioning cylinder (52).

8. Vehicle according to any one of claims 1 to 7,
**characterized in that**
during operation a support disk (66) is arranged on the piston rod (56) below the ballast weight (30) in the mounting position.

9. Vehicle according to any one of claims 1 to 8,
**characterized in that**
two positioning cylinders (52) are provided, which can be actuated simultaneously for lifting and lowering the ballast weight (30).

## Revendications

1. Véhicule, en particulier véhicule de chantier, avec
- un poids de lestage (30) amovible avec une plaque de base (32),
- un dispositif de hissage (50) servant à hisser le poids de lestage (30) d'une position de dépôt dans une position de montage au niveau du véhicule (10), et
- un dispositif de support avec au moins un pied de support (64) pouvant être déployé,
- dans lequel le dispositif de support présente, afin de déployer l'au moins un pied de support (64), au moins un vérin de réglage (52),
- l'au moins un vérin de réglage (52) est réalisé à la fois afin de hisser et d'abaisser le poids de lestage (30), et
- l'au moins un vérin de réglage (52) présente une tige de piston (56), qui peut être reliée à la fois à un plateau de support (66) et au poids de lestage (30), **caractérisé en ce**
- **que** deux tiges de maintien (33) dépassent vers le haut au niveau de la plaque de base (32),
- **que** des douilles de réception (27) sont disposées au niveau d'un chariot supérieur (14), dans lesquelles les tiges de maintien (33) dépassent à l'intérieur lors du hissage dans la position de montage,
- **que** des passages de boulon (35) sont prévus dans les tiges de maintien (33) et dans les douilles de réception (27), et
- **qu'**au moins un dispositif de fixation (24) avec un vérin de réglage (26) orienté de manière horizontale est prévu avec un boulon de blocage (25), qui peut être déplacé dans un passage de boulon (35) aux fins de la fixation amovible du poids de lestage (30) au niveau du chariot supérieur (14).

2. Véhicule selon la revendication 1,
**caractérisé en ce**
**que** le poids de lestage (30) présente pour chaque vérin de réglage (52) un passage (36), que le vérin de réglage (52) respectif traverse de part en part.

3. Véhicule selon la revendication 1 ou 2,
**caractérisé en ce**
**qu'**un dispositif de verrouillage (40) est prévu afin de relier de manière amovible le poids de lestage (30) à la tige de piston (56) de l'au moins un vérin de réglage (52).

4. Véhicule selon la revendication 3,
**caractérisé en ce**
**que** le dispositif de verrouillage (40) comprend au moins un boulon de verrouillage (42) servant à former une liaison par complémentarité de forme.

5. Véhicule selon la revendication 3 ou 4,
**caractérisé en ce**
**que** d'autres plaques de lestage (34) peuvent être installées sur la plaque de base (32), et
**que** le dispositif de verrouillage (40) est réalisé dans la zone de la plaque de base (32).

6. Véhicule selon l'une quelconque des revendications 1 à 5,
**caractérisé en ce**
**que** le véhicule (10) présente un chariot inférieur (12) et le chariot supérieur (14) monté de manière à pouvoir tourner par rapport à ce dernier, dans lequel le vérin de réglage (52) et le poids de lestage (30) sont disposés dans la position de montage au niveau d'une zone arrière du chariot supérieur (14).

7. Véhicule selon la revendication 6,
**caractérisé en ce**
**que** le poids de lestage (30) au niveau du chariot supérieur (14) parvient, dans au moins une position de montage, au-dessus du chariot inférieur (12) et peut être déposé de manière verticale par l'au moins un vérin de réglage (52) dans la position de dépôt sur le sol.

8. Véhicule selon l'une quelconque des revendications 1 à 7,
**caractérisé en ce**
**que**, lors du fonctionnement, un panneau de support (66) est disposé, dans la position de montage, au niveau de la tige de piston (56) en dessous du poids de lestage (30).

9. Véhicule selon l'une quelconque des revendications 1 à 8,
**caractérisé en ce**
**que** sont prévus deux vérins de réglage (52), qui peuvent être actionnés de manière simultanée afin de hisser et d'abaisser le poids de lestage (30).
